Europäisches Patentamt

European Patent Office

Office européen des brevets

(11) Numéro de publication: **0 226 526**
A1

## (12) DEMANDE DE BREVET EUROPEEN

(21) Numéro de dépôt: **86630141.9**

(22) Date de dépôt: **17.09.86**

(51) Int. Cl.⁴: **F 03 D 3/04**

(30) Priorité: **17.09.85 PT 81146**

(43) Date de publication de la demande:
**24.06.87 Bulletin 87/26**

(84) Etats contractants désignés:
**AT BE CH DE FR GB IT LI LU NL SE**

(71) Demandeur: **Teles de Menezes Jr, Antonio**
**Freamunde**
**Quinta da Vista Alegre (PT)**

(72) Inventeur: **Teles de Menezes Jr, Antonio**
**Freamunde**
**Quinta da Vista Alegre (PT)**

(74) Mandataire: **Weydert, Robert et al**
**OFFICE DENNEMEYER S.à.r.l. P.O. Box 1502**
**L-1015 Luxembourg (LU)**

(54) **Appareil de captation et orientation du vent, visant un plus grand usage énergétique.**

(57) L'invention se rapporte à un appareil de captation et orientation du vent envisageant un plus grand usage énergétique. L'appareil comporte un entonnoir captateur (A) de vent, orientable automatiquement par un système mécanique actionné par le vent lui-même et, dont la bouche de sortie est toujours orientée perpendiculairement à l'arbre de support (C) des palettes (B) et dont la bouche d'entrée présente le double avantage de capter un plus grand débit de vent, lui imprimant une vitesse de sortie sensiblement supérieure à la vitesse d'entrée, et de détourner l'air des autres palettes sur lesquelles il aurait un effet de freinage.

FIG. 1

EP 0 226 526 A1

**Description**

La présente lutte énergie/coût pousse l'homme à chercher toutes les possibilités de vaincre un tel problème.

Cette invention concerne le maximum d'usage de l'énergie cinétique du vent.

Elle comprend un appareil constitué par un entonnoir capteur de vent, dont la bouche de sortie se trouve toujours orientée en direction perpendiculaire à l'arbre de support des palettes et dont la bouche d'entrée présente le double avantage de capter un plus grand débit de vent, lui imprimant une vitesse de sortie sensiblement supérieure à la vitesse d'entrée, et de détourner l'air des autres palettes sur lesquelles il aurait un effet de freinage.

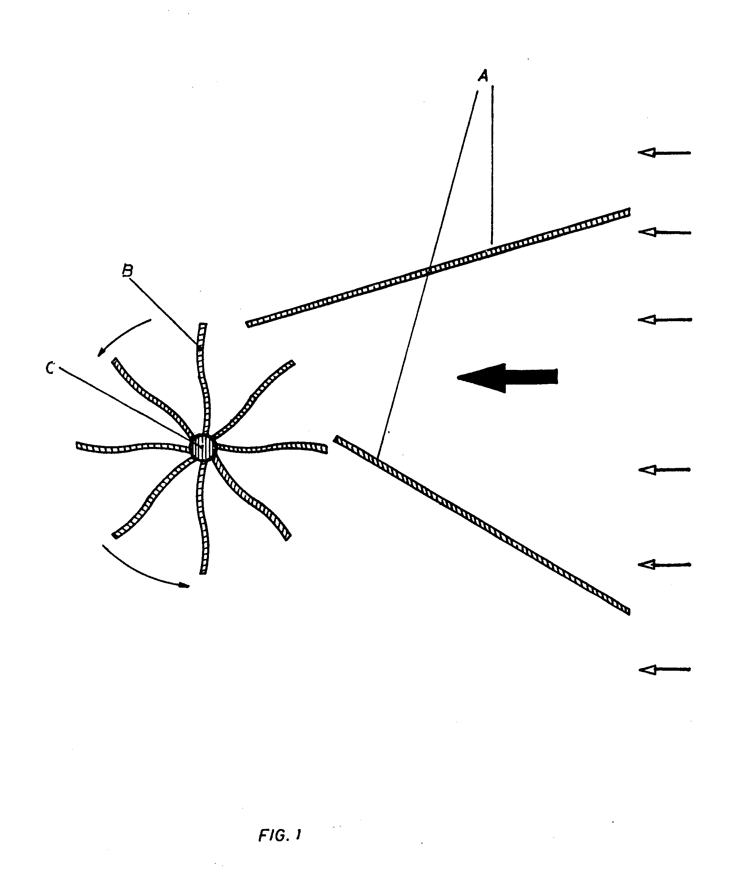

Sur le dessin annexé, présenté à titre d'exemple et sans caractère limitatif, se réprésentent, en coupe, les éléments constitutifs de l'appareil.

Le vent sera capté par le capteur A que le canalisera de façon plus profiteuse sur un ensemble de palettes B radialement liées à l'arbre de support C.

Le changement de la direction du vent aura, par conséquence immédiate, la rotation de l'élément capteur A sur l'arbre de support C des palettes B.

La force permettant cette rotation est fournie par le vent même, qui actionne un système mécanique approprié.

La présente invention se compose essentiellement du système adopté pour capter le vent et de la protection crée par lui sur les palettes, ne pas laissant le vent opérer sur les autres zones.

Les palettes B seront toujours en rotation quelle que soit la direction du vent, et ne sont pas influencées par la rotation de l'élément capteur A.

La forme et les possible dimensions de cet élément sont choisies en vue de capter un grand débit de vent, lui donnant la forme d'entonnoir dirigeant le vent à grande vitesse sur les palettes B.

La constance du mouvement des palettes B, et la façon dont le vent est conduit et la vitesse qu'il atteint à la sortie du capteur A, bien que la protection donnée aux palettes, fournit un grand accroissement de la rentabilité en face d'autres systèmes déjà connus.

Sous l'aspect de construction, cette invention est de facile réalisation, pouvant prendre une disposition horizontale, même si le dessin annexé le représente orienté verticalement.

**Revendications**

1. Appareil de captation et orientation du vent visant un plus grand usage énergétique, caractérisé par un capteur de vent en forme d'entonnoir adapté à la direction des palettes réceptrices et qui dirige le vent contre les extrémités libres de celles-ci, le détournant, au même temps, des autres palettes sur lesquelles il aurait un effet de freinage.

2. Appareil selon la revendication 1, caractérisé par le fait de la bouche de sortie de l'air du capteur se trouve toujours orientée perpendiculairement à l'arbre de support des palettes.

3. Appareil selon les revendications 1 et 2, caractérisé par le fait que le capteur est automatiquement orienté par un système mécanique actionné par le vent lui-même.

FIG. 1

Office européen
des brevets

**RAPPORT DE RECHERCHE EUROPEENNE**

Numéro de la demande

EP  86 63 0141

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | FR-A- 760 133 (DECOBERT) <br> * Page 1, lignes 33-59 * <br><br> --- | 1-3 | F 03 D  3/04 |
| X | FR-E- 22 605 (CHRISTOFLEAU) <br> * Page 1, ligne 20 - page 2, ligne 11 * <br><br> ----- | 1-3 | |

DOMAINES TECHNIQUES
RECHERCHES (Int. Cl.4)

F 03 D

Le présent rapport de recherche a été établi pour toutes les revendications

| Lieu de la recherche | Date d'achèvement de la recherche | Examinateur |
|---|---|---|
| LA HAYE | 16-12-1986 | DE WINTER P.E.F. |